# EUROPEAN PATENT APPLICATION

(11) **EP 4 792 919 A1**
(43) Date of publication of application: **19.08.2026**
(21) Application number: 24882429.4
(22) Date of filing: 24.10.2024
(51) Int. Cl.: B01D 69/12, B01D 53/22, B01D 69/00, B01D 69/10, B01D 71/64, B01D 71/70, B32B 5/18, B32B 27/00, B32B 37/02

(54) **METHOD FOR PRODUCING LAMINATED FILM, LAMINATED FILM, AND CO2 SEPARATION METHOD**

(30) Priority: 26.10.2023 JP 2023184202
(71) Applicant: TOKYO OHKA KOGYO CO., LTD., Kawasaki-shi, Kanagawa 211 0012 (JP)
(72) Inventor: SUGAWARA, Tsukasa, Kawasaki-shi, Kanagawa 211-0012 (JP)
(74) Representative: Plasseraud IP
(86) International application number: PCT/JP2024/037858
(87) International publication number: WO 2025/089318

(57) **Abstract**

Provided is a method for producing a laminated film in which a CO₂ separation film and a support substrate are laminated, the method allowing for the production of a laminated film having a thin and large CO₂ separation film with defects suppressed. Also provided are the laminated film and a CO₂ separation method using the laminated film. This method is for producing a laminated film in which a CO₂ separation film and a porous film, which is a support substrate for the CO₂ separation film, are laminated. The method includes: a coating film forming step of forming on a sacrificial layer a coating film of a raw material composition including a raw material for the CO₂ separation film; a porous film bonding step of bonding the porous film onto the coating film; and a sacrificial layer removing step of removing the sacrificial layer after the porous film bonding step. The raw material composition contains a silicon-containing resin and an organic solvent. The silicon-containing resin is a non-water-soluble resin. The silicon-containing resin has a mass average molecular weight of 2000 or more.

## Description

### TECHNICAL FIELD

The present invention relates to a method for producing a laminated film, a laminated film, and a CO₂ separation method.

### BACKGROUND ART

To suppress global warming due to climate change, etc., technologies for separating and recovering carbon dioxide (CO₂) using a CO₂ separation film are being developed (for example, Patent Document 1).

### Citation List

### Patent Documents

Patent Document 1: Japanese Unexamined Patent Application Publication No. 2018-15678

### DISCLOSURE OF THE INVENTION

### Problems to be Solved by the Invention

In the case of producing a thin and large CO₂ separation film, there is a problem in that defects such as chips and pinholes tend to occur in the CO₂ separation film produced. For example, it has been considered to form a sacrificial layer on a support, and form the CO₂ separation film on the sacrificial layer, followed by immersing in a liquid such as ethanol to remove the sacrificial layer, thereby form a thin and large CO₂ separation film. However, with this method, chips and pinholes occur in the produced film.

Herein, in the case of the CO₂ separation film being a thin or large-scale film, it is difficult to stand alone as the CO₂ separation film, and deformation and breakage tend to occur. For this reason, it has been considered to use in CO₂ separation as a laminated film in which a support substrate (porous film) supporting (reinforcing) the CO₂ separation film is adhered to the CO₂ separation film.

The present invention has been made taking consideration of the above-mentioned problems, and has an object of providing a method for producing a laminated film capable of producing a laminated film having suppressed defects in which a thin and large CO₂ separation film and a support substrate are laminated, as well as a laminated film, and a CO₂ separation method using the laminated film.

### Means for Solving the Problems

The present inventors found that the above-mentioned problem could by solved by a method for producing a laminated film in which a CO₂ separation film and a porous film which is a support substrate of the CO₂ separation film are laminated, the method including: a coating film forming step of forming a coating film of a raw material composition containing a raw material of the CO₂ separation film on a sacrificial layer; a porous film bonding step of bonding the porous film on the coating film; and a sacrificial layer removing step of removing the sacrificial layer after the porous film bonding step, in which the raw material composition contains a silicon-containing resin and an organic solvent, the silicon-containing resin is a water insoluble resin, and a mass average molecular weight of the silicon-containing resin is 2000 or more, thereby arriving at completion of the present invention. Specifically the present invention provides the following.
(1) In a method for producing a laminated film in which a CO₂ separation film, and a porous film that is a support substrate of the CO₂ separation film are laminated, the method includes:
   a coating film forming step of forming a coating film of a raw material composition containing a raw material of the CO₂ separation film on a sacrificial layer;
   a porous film bonding step of bonding the porous film on the coating film; and
   a sacrificial layer removing step of removing the sacrificial layer after the porous film bonding step,
   in which the raw material composition contains a silicon-containing resin and an organic solvent,
   the silicon-containing resin is a water insoluble resin, and a mass average molecular weight of the silicon-containing resin is 2000 or more.
(2) In the method for producing a laminated film as described in (1) above, the CO₂ separation film has an area of 0.03 m² or more, and a thickness of 1 nm or more and 10000 nm or less.
(3) In the method for producing a laminated film as described in (1) or (2) above, the silicon-containing resin contains polydimethylsiloxane.
(4) The method for producing a laminated film as described in (3) above, further includes a curing step of curing the polydimethylsiloxane after the porous film bonding step and before the sacrificial layer removing step.
(5) In the method for producing a laminated film as described in any one of (1) to (4) above, the porous film is a porous film consisting of a polyimide.
(6) In the method for producing a laminated film as described in any one of (1) to (5) above, the porous film has a pore size of 1 mm or less.
(7) The method for producing a laminated film as described in any one of (1) to (6) above, further includes: a sacrificial layer forming step of forming the sacrificial layer on a support of the sacrificial film prior to the coating film forming step; and
   a support peeling step of peeling the support from the sacrificial layer after the porous film bonding step and before the sacrificial layer removing step.
(8) In the method for producing a laminated film as described in (7) above, the support is a film consisting of polyethylene terephthalate.
(9) In the method for producing a laminated film as described in any one of (1) to (8) above, the laminated film is a wound up film roll.
(10) A laminated film includes a CO₂ separation film and a porous film which is a support substrate of the CO₂ separation film that are laminated,
   in which the CO₂ separation film has an area of 0.03 m² or more, and a thickness of 1 nm or more and 10000 nm or less.
(11) In the laminated film as described in (10) above, the film is a film roll wound up into a roll form.
(12) A CO₂ separation method includes a separation step of separating CO₂ from a gas containing CO₂ by supplying the gas to the laminated film as described in (10) or (11) above.

### Effects of the Invention

According to the present invention, it is possible to provide a method for producing a laminated film capable of producing a laminated film having suppressed defects in which a thin and large CO₂ separation film and a support substrate are laminated, as well as a laminated film, and a CO₂ separation method using the laminated film.

### BRIEF DESCRIPTION OF THE DRAWINGS

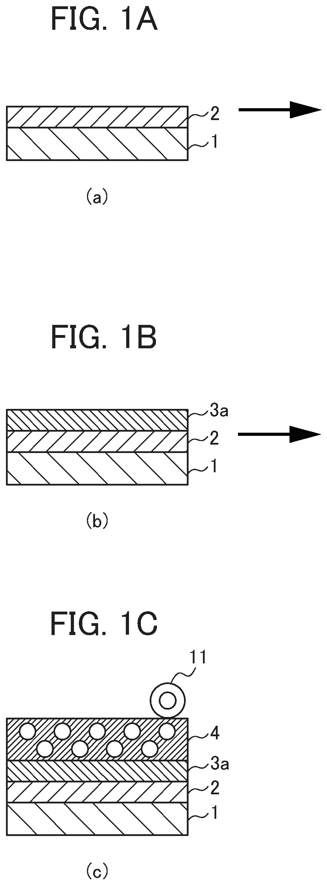

FIGs. 1A to 1F are schematic diagrams for explaining a method for producing a laminated film.

### PREFERRED MODE FOR CARRYING OUT THE INVENTION

### <<Method for Producing Laminated Film>>

The method for producing a laminated film is a laminated film production method in which a CO₂ separation film, and a porous film which is a support substrate of the CO₂ separation film are laminated. It is also possible to produce a wound up film roll as the laminated film. The method for producing a laminated film includes:
a coating film forming step of forming a coating film of a raw material composition containing a raw material of the CO₂ separation film on a sacrificial layer;
a porous film bonding step of bonding the porous film on the coating film; and
a sacrificial layer removing step of removing the sacrificial layer after the porous film bonding step. The raw material composition contains a silicon-containing resin and an organic solvent. The silicon-containing resin is a water insoluble resin, and a mass average molecular weight of the silicon-containing resin is 2000 or more.

By producing a laminated film by such a method for producing a laminated film, it is possible to produce a laminated film in which a thin and large CO₂ separation film for which defects such as voids and pinholes are suppress, and a porous film (support substrate) are laminated, as shown in the Examples described later. In addition, the above-mentioned production method is superior in continuous productivity (mass production), as shown in the steps constituting the above-mentioned production method.

The CO₂ separation film in the produced laminated film, for example, has an area of 0.03 m² or more, and a thickness of 1 nm or more and 10000 nm or less. The area of the CO₂ separation film is preferably 0.05 m² or more. The area of the CO₂ separation film is preferably 0.03 m² or more and 1000 m² or less, is more preferably 0.05 m² or more and 800 m² or less, and even more preferably 0.1 m² or more and 500 m² or less. The thickness of the CO₂ separation film is preferably 50 nm or more and 5000 nm or less, and more preferably 80 nm or more and 1000 nm or less.

The method for producing a laminated film, in the case of a silicon-containing resin including polydimethylsiloxane, may include a curing step of curing the polydimethylsiloxane after a porous film bonding step, and prior to a sacrificial layer removing step. In addition, the method for producing a laminated film may include a sacrificial layer forming step of forming a sacrificial layer on a support of the sacrificial layer prior to a coating film forming step; and a support peeling step of peeling the support from the sacrificial layer after the porous film bonding step and prior to the sacrificial layer removing step. Each step will be described below using FIGs. 1 A to 1F. FIGs. 1 A to 1F are schematic diagrams for explaining a method for producing a laminated film.

### (Sacrificial Layer Forming Step)

In the sacrificial layer forming step, a sacrificial layer 2 is formed on a support 1 of the sacrificial layer 2 (FIG. 1A). The sacrificial layer 2 is typically formed using a sacrificial layer-forming composition. The sacrificial layer-forming composition is not particularly limited so long as being a composition that can form a sacrificial layer that can be removed in the sacrificial layer removing step at a later stage. The sacrificial layer-forming composition typically includes a resin and a solvent.

Examples of the resin contained in the sacrificial layer-forming composition include polyvinyl alcohol resin, dextrin, gelatin, animal glue, casein, shellac, gum arabic, starch, protein, polyacrylic acid amide, sodium polyacrylate, polyvinyl methyl ether, copolymers of methyl vinyl ether and maleic anhydride, copolymers of vinyl acetate and itaconic acid, polyvinylpyrrolidone, acetyl cellulose, acetyl butyl cellulose, carboxymethyl cellulose, methyl cellulose, hydroxyethyl cellulose, and sodium alginate.

The amount of resin contained in the sacrificial layer-forming composition is not particularly limited in a range not inhibiting the object of the present invention, and is determined appropriately in view of the coating properties, etc. of the sacrificial layer-forming composition. In the case of defining the mass of resin in the sacrificial layer-forming composition as 100 parts by mass, the amount of solvent is preferably 100 parts by mass or more and 10000 parts by mass or less, more preferably 500 parts by mass or more and 8000 parts by mass or less, and particularly preferably 700 parts by mass or more and 6000 parts by mass or less.

The solvent contained in the sacrificial layer-forming composition is not particularly limited so long as being a solvent in which the resin is soluble. So long as a predetermined amount of resin dissolves in the sacrificial layer-forming composition, the sacrificial layer-forming composition may contain the resin in an undissolved state. The resin preferably completely dissolves in the sacrificial layer-forming composition.

The solvent may be water, may be an organic solvent, or may be an aqueous solution of the organic solvent.

Specific examples of the organic solvent used as the solvent include:
monoalcohol solvents such as methanol, ethanol, n-propanol, isopropanol, n-butanol, isobutanol, sec-butanol, tert-butanol, n-pentanol, isopentanol, 2-methylbutanol, sec-pentanol, tert-pentanol, 3-methoxybutanol, 3-methyl-3-methoxybutanol, n-hexanol, 2-methylpentanol, sec-hexanol, 2-ethyl-1-butanol, sec-heptanol, 3-heptanol, 1-octanol, 2-ethylhexanol, sec-octanol, n-nonyl alcohol, 2,6-dimethyl-4-heptanol, n-decanol, sec-pentadecyl alcohol, trimethylnonyl alcohol, sec-tetradecyl alcohol, sec-heptadecyl alcohol, methyl isobutyl carbinol, phenol, cyclohexanol, methylcyclohexanol, 3,3,5-trimethylcyclohexanol, benzyl alcohol, phenylmethyl carbinol, diacetone alcohol, and cresol;
sulfoxides such as dimethyl sulfoxide;
sulfones such as dimethyl sulfone, diethyl sulfone, bis(2-hydroxyethyl) sulfone, and tetramethylene sulfone;
amides such as N,N-dimethylformamide, N-methylformamide, N,N-dimethylacetamide, N-methylacetamide, and N,N-diethylacetamide;
lactams such as N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone;
imidazolidinones such as 1,3-dimethyl-2-imidazolidinone, 1,3-diethyl-2-imidazolidinone, and 1,3-diisopropyl-2-imidazolidinone;
dialkyl glycol ethers such as dimethyl glycol, dimethyl diglycol, dimethyl triglycol, methyl ethyl diglycol, diethyl glycol, and triethylene glycol butyl methyl ether; (poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether;
(poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate;
other ethers such as dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol diethyl ether, and tetrahydrofuran;
ketones such as methyl ethyl ketone, cyclohexanone, 2-heptanone, and 3-heptanone;
alkyl lactate esters such as methyl 2-hydroxypropionate and ethyl 2-hydroxypropionate;
other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methyl-3-methoxybutyl acetate, 3-methyl-3-methoxybutyl propionate, ethyl acetate, n-propyl acetate, i-propyl acetate, n-butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, and ethyl 2-oxobutanoate; lactones such as β-propylolactone, γ-butyrolactone, and δ-pentyrolactone;
linear, branched, or cyclic aliphatic hydrocarbons such as n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane, and methylcyclohexane;
aromatic hydrocarbons such as benzene, toluene, xylene, 1,3,5-trimethylbenzene, and naphthalene; and
terpenes such as p-menthane, diphenylmenthane, limonene, terpinene, bornane, norbornane, and pinane.

In the case of the solvent being a mixed solvent of water and organic solvent, the content of the organic solvent in the solvent is preferably 10% by mass or more, and more preferably 20% by mass or more.

The sacrificial layer-forming composition may contain various components other than the resin and solvent in a range not inhibiting the object of the present invention. Examples of the other components include viscosity modifiers, surfactants and defoaming agents, for example.

The method of preparing the sacrificial layer-forming composition is not particularly limited. The sacrificial layer-forming composition is typically prepared by uniformly mixing predetermined amount of each resin, solvent and other components to be contained as necessary.

As the support 1 supporting the sacrificial layer 2, a film made of a resin such as a PET (polyethylene terephthalate) film, or a substrate such as a silicon substrate or glass substrate can be exemplified. In the support 1, a surface on which the sacrificial layer 2 is formed may or may not be treated by a mold release agent. The shape of the support 1 is not particularly limited, and may be film form or plate form. In the case of the shape of the support being a film form, it is possible to use a film drawn out from a film roll as the support 1.

The method of forming the sacrificial layer 2 on the support 1 using a sacrificial layer-forming composition is not particularly limited and, for example, coating methods such as a bar coating method, slit die coating method, gravure coating method, spin coating method, spray method, roller coating method, and dipping method can be exemplified.

After the sacrificial layer-forming composition is coated onto the support 1, the coating film of the sacrificial layer-forming composition is heated (dried) as necessary, and at least part of the solvent of the sacrificial layer-forming composition may be removed. The heating temperature of the coating film of the sacrificial layer-forming composition, for example, is 50°C or higher and 90°C or lower. In addition, after heating at a low temperature (for example, 50°C or higher and lower than 70°C), the coated film may be heated at high temperature (for example, 70°C or higher and 90°C or lower).

Although the film thickness (thickness) of the sacrificial layer 2 is not particularly limited, it is preferably 1 µm or more and 20 µm or less, more preferably 3 µm or more and 18 µm or less, and even more preferably 5 µm or more and 15 µm or less.

### (Coating Film Forming Step)

A coating film forming step forms a coating film 3a of the raw material composition (coating film-forming composition) containing the raw materials of the CO₂ separation film on the sacrificial layer 2 (FIG. 1B). The raw material composition (CO₂ separation film-forming composition) contains a silicon-containing resin, and an organic solvent. The silicon-containing resin is a water-insoluble resin, and the mass average molecular weight of the silicon-containing resin is 2000 or more. The water-insoluble resin is a resin which will only dissolve at 1.0 g or less in 100 g of water at 25°C.

As the silicon-containing resin, a silicone resin (resin having siloxane bonds in main backbone) can be exemplified. As the silicone resin, polyorganosiloxanes such as polydimethylsiloxane, polyphenylmethylsiloxane, and polydiphenylsiloxane are preferable, and polydimethylsiloxane is more preferable. Polyorganosiloxanes may be used jointly with a curing agent for polyorganosiloxanes. The silicon-containing resin may have hydroxyl groups at both ends or one end of the molecular chain. In addition, the silicon-containing resin may be an elastomer.

The mass average molecular weight Mw of the silicon-containing resin is 2000 or more, preferably 2200 or more and 200000 or less, and more preferably 2500 or more and 120000 or less. It should be noted that, in the present specification, the mass average molecular weight Mw can be defined as the relative value of polystyrene equivalent in the GPC (gel permeation chromatography) measurement.

The curing agent contained in the raw material composition together with the polyorganosiloxane is a curing agent that cures the polyorganosiloxane. As the curing agent, for example, alkoxysilanes such as tetramethoxysilane, trimethoxymethylsilane, dimethoxydimethylsilane, methoxytrimethylsilane, and γ-glycidoxypropyltrimethoxysilane can be exemplified.

The content of curing agent in the raw material composition is not particularly limited. In the raw material composition, the content of the curing agent is preferably 1 part by mass or more and 20 parts by mass or less, and more preferably 5 parts by mass or more and 15 parts by mass or less, relative to 100 parts by mass of the polyorganosiloxane.

As the solvent contained in the raw material composition, for example, sulfoxides, sulfones, amides, lactams, imidazolidinones, dialkyl glycol ethers, (poly)alkylene glycol monoalkyl ethers, (poly)alkylene glycol monoalkyl ether acetates, other ethers, ketones, other esters, lactones, linear, branched, or cyclic aliphatic hydrocarbons, aromatic hydrocarbons, terpenes, etc. can be exemplified. As sulfoxides, dimethyl sulfoxide can be exemplified. As sulfones, for example, dimethyl sulfone, diethyl sulfone, bis(2-hydroxyethyl) sulfone, and tetramethylene sulfone can be exemplified. As amides, for example, N,N-dimethylformamide, N-methylformamide, N,N-dimethylacetamide, N-methylacetamide, and N,N-diethylacetamide can be exemplified. As the lactams, for example, N-methyl-2-pyrrolidone, N-ethyl-2-pyrrolidone, N-propyl-2-pyrrolidone, N-hydroxymethyl-2-pyrrolidone, and N-hydroxyethyl-2-pyrrolidone can be exemplified. As the imidazolidinones, for example, 1,3-dimethyl-2-imidazolidinone, 1,3-diethyl-2-imidazolidinone, and 1,3-diisopropyl-2-imidazolidinone can be exemplified. As the dialkyl glycol ethers, for example, dimethyl glycol, dimethyl diglycol, dimethyl triglycol, methyl ethyl diglycol, diethyl glycol, and triethylene glycol butyl methyl ether can be exemplified. As the (poly)alkylene glycol monoalkyl ethers, for example, ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether can be exemplified. As the (poly)alkylene glycol monoalkyl ether acetates, for example, ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, propylene glycol monomethyl ether acetate, and propylene glycol monoethyl ether acetate can be exemplified. As the other ethers, for example, dimethyl ether, diethyl ether, methyl ethyl ether, dipropyl ether, diisopropyl ether, dibutyl ether, diisoamyl ether, diethylene glycol dimethyl ether, diethylene glycol methyl ethyl ether, diethylene glycol monobutyl ether, diethylene glycol diethyl ether, tetraethylene glycol dimethyl ether, and tetrahydrofuran can be exemplified. As the ketones, for example, methyl ethyl ketone, cyclohexanone, 2-heptanone, 3-heptanone, and 2,6-dimethyl-4-heptanone can be exemplified. As the other esters, for example, alkyl lactate esters such as methyl lactate and ethyl lactate; ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxy-1-butyl acetate, 3-methyl-3-methoxybutylpropionate, ethyl acetate, n-propyl acetate, isopropyl acetate, n-butyl acetate, isobutyl acetate, n-pentyl acetate, n-hexyl acetate, n-heptyl acetate, n-octyl acetate, n-pentyl formate, isopentyl acetate, n-butyl propionate, ethyl butyrate, n-propyl butyrate, isopropyl butyrate, butyl butyrate, methyl n-octanoate, methyl decanoate, methyl pyruvate, ethyl pyruvate, n-propyl pyruvate, methyl acetoacetate, ethyl acetoacetate, ethyl 2-oxobutanoate, dimethyl adipate, and propylene glycol diacetate can be exemplified. As the lactones, for example, propyrolactone, γ-butyrolactone, and 6-pentyrolactone can be exemplified. As the linear, branched, or cyclic aliphatic hydrocarbons, for example, n-hexane, n-heptane, n-octane, n-nonane, methyloctane, n-decane, n-undecane, n-dodecane, 2,2,4,6,6-pentamethylheptane, 2,2,4,4,6,8,8-heptamethylnonane, cyclohexane, and methylcyclohexane can be exemplified. As the aromatic hydrocarbons, for example, benzene, toluene, benzotrifluoride, xylene, 1,3,5-trimethylbenzene, naphthalene, and decahydronaphthalene can be exemplified. As the terpenes, for example, p-menthane, diphenylmenthane, limonene, terpinene, bornane, norbornane, and pinane can be exemplified.

The viscosity of the raw material composition at 24°C is preferably 5 cp or more and 500 cp or less, more preferably 10 cp or more and 200 cp or less, and even more preferably 20 cp or more and 100 cp or less. In addition, the solid content concentration of the raw material composition is preferably 1% by mass or more and 20% by mass or less, more preferably 3% by mass or more and 18% by mass or less, and even more preferably 5% by mass or more and 15% by mass or less.

The method of preparing the raw material composition is not particularly limited. The raw material composition is typically prepared by uniformly mixing the silicon-containing resin, solvent, and a curing agent and the like to be contained as necessary.

After coating the raw material composition on the sacrificial layer 2, at least part of the solvent of the film formation composition may be removed by heating (drying) the coating film as necessary. The heating (drying) temperature of the coating film is 40°C or higher and 60°C or lower, for example. The heating (drying) time of the coating film is 0.5 minutes or more and 1 minute or less, for example.

### (Porous Film Bonding Step)

In the porous film bonding step, the porous film 4 which is the support substrate of the CO₂ separation film is bonded onto the coating film 3a (FIG. 1C). It should be noted that the CO₂ separation film is formed from the coating film 3a. In the case of the CO₂ separation film being a thin and large film, it is difficult to stand alone as the CO₂ separation film, and deformation and breakage tend to occur. By bonding the porous film 4 supporting (reinforcing) the CO₂ separation film, it is possible to suppress deformation and breakage, and maintain the functions such as separation performance of the CO₂ separation film.

The pore size of the porous film 4 is preferably 1 mm or less, more preferably 1 nm or more and 10000 nm or less, and even more preferably 10 nm or more and 5000 nm or less. The pore size (average pore diameter) of the porous film 4 can be measured by measuring the pore size distribution using a through-pore size evaluation device based on ASTM F316-86 (JIS K 3832) bubble point method. As the porometer used in measurement (through-pore size distribution measurement device), a Nano-Perm Porometer manufactured by SEIKA Digital Image Corp. can be exemplified.

As the material of the porous film 4, it may be an organic material or an inorganic material; however, an organic material is preferred. Such an organic material is typically a resin. As the resin, for example, polyacetal, polyamide, polycarbonate, polyesters (polybutylene terephthalate, polyethylene terephthalate, polyarylate, etc.), FR-AS resin, FR-ABS resin, AS resin, ABS resin, polyphenylene oxide, polyphenylene sulfide, polysulfone, polyethersulfone, polyetheretherketone, fluorine resins (polytetrafluoroethylene, polyvinylidene fluoride, etc.), polyimide, polyamideimide, polyamidebismaleimide, polyetherimide, polybenzoxazole, polybenzothiazole, polybenzimidazole, silicone resin, BT resin, polymethylpentene, ultra-high molecular weight polyethylene, FR-polypropylene, (meth)acrylic resins (polymethyl methacrylate), and polystyrenes can be exemplified. Among the resins, polyvinylidene fluoride, polyethersulfone, polyimide, and polyamideimide are preferred due to easily obtaining a thermally or chemically stable film superior in mechanical strength. As the material of the porous film, two or more types of resins may be used by mixing together. The shape of the porous film 4 is a film form. A film drawn out from a film roll can be used as the porous film 4.

Although the thickness of the porous film 4 is not particularly limited, it is preferably 1 µm or more and 100 µm or less, more preferably 10 µm or more and 80 µm or less, and even more preferably 20 µm or more and 60 µm or less.

The method of bonding the porous film 4 onto the coating film 3a is not particularly limited. For example, lamination or a transfer method utilizing intermolecular forces can be exemplified. Even without using an adhesive, it is possible to bond the coating film 3a and the porous film 4. For example, using a roller 11 or the like, the film 3 may be laminated (thermocompression bonded) to the porous film 4 with a pressure of an extent that the porous film 4 is not damaged. Regarding the condition of thermocompression bonding, the pressure of the roller is preferably 0.1 kgf/cm² or more and 10 kgf/cm² or less, and is more preferably 0.2 kgf/cm² or more and 5 kgf/cm² or less. The temperature of the roller is preferably 20°C or higher and 120°C or lower, and more preferably 25°C or higher and 100°C or lower. In the case of using intermolecular forces, for example, it is sufficient so long as causing the coating film 3a and the porous film 4 to come into contact.

### (Curing Step)

In the case of the raw material composition forming the coating film in the coating film forming step containing polydimethylsiloxane as the silicon-containing resin, after the porous film bonding step and before the sacrificial layer removing step, a curing step may be included for curing the polydimethylsiloxane. In the curing step, the coating film cures to form a cured film (CO₂ separation film 3). It should be noted that, in the case of not including a curing step, the coating film 3a may be the CO₂ separation film 3.

As the method for curing, heating of the coating film can be exemplified. Upon heating in the curing step, the solvent may be removed. The heating temperature of the coating film, for example, is 100°C or higher and 160°C or lower, and preferably 105°C or higher and 150°C or lower. In addition, the heating time of the coating film, for example, is 1 minute or more and 10 minutes or less, and preferably 2 minutes or more and 5 minutes or less.

### (Support Peeling Step)

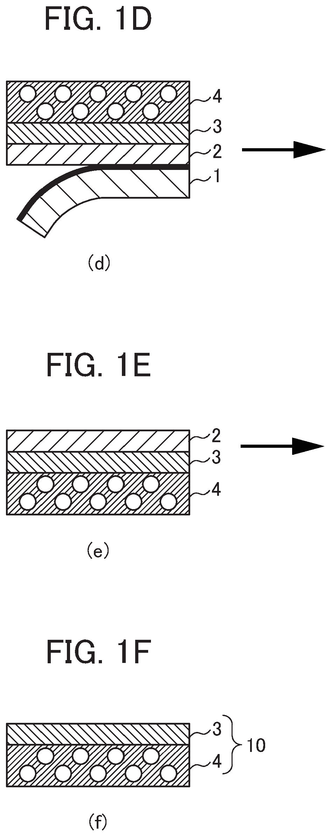

In the support peeling step, the support 1 is peeled from the sacrificial layer 2 (FIG. 1D). The method of peeling the support 1 from the sacrificial layer 2 is not particularly limited. A method tearing off the support 1 from the sacrificial layer 2 without using a stripping solution or the like can be exemplified. In the case of the support 1 being of film form, it is possible to peel the support 1 from the sacrificial layer 2 by unwinding the film. Upon peeling the support 1 from the sacrificial layer 2, a part of the sacrificial layer 2 may be peeled together with the support 1.

### (Sacrificial Layer Removing Step)

The sacrificial layer removing step removes the sacrificial layer 2 (FIG. 1E). The laminated film 10 in which the CO₂ separation film 3 and the porous film 4 are laminated can be thereby produced (FIG. 1F). The laminated film 10 may be dried by air blowing, a dryer or the like, as necessary.

The sacrificial layer 2 is typically removed by dissolving the sacrificial layer 2 in a liquid. The liquid dissolving the sacrificial layer 2 may be water, an organic solvent, or a mixed solvent of water and organic solvent. In the case of dissolving the sacrificial layer with these liquids, part of the sacrificial layer may remain undissolved in the liquid. In order to remove the remaining sacrificial layer, it is preferable to further dissolve the sacrificial layer using an alkali aqueous solution (basic aqueous solution), for example.

The method of dissolving the sacrificial layer 2 in liquid is not particularly limited; however, a method washing the sacrificial layer 2 with running water, a method soaking the sacrificial layer 2 in a liquid, and a method spraying a liquid spewing from a shower onto the sacrificial layer 2 can be exemplified. The running water washing time of the sacrificial layer 2 is not particularly limited; however, it is 1 minute or more and 30 minutes or less, for example. The soaking time of the sacrificial layer 2 in liquid is not particularly limited; however, it is 5 minutes or more and 120 minutes or less, for example. The spraying time of liquid onto the sacrificial layer 2 is not particularly limited; however, it is 2 minutes or more and 5 minutes or less, for example. In addition, the temperature of the liquid is not particularly limited; however, it is 10°C or higher and 40°C or lower, and may be 20°C or higher and 30°C or lower, for example.

### <<Laminated Film>>

The laminated film is a laminated film in which the CO₂ separation film and the porous film which is a support substrate of the CO₂ separation film are laminated, in which the CO₂ separation film has an area of 0.03 m² or more, and a thickness of 1 nm or more and 10000 nm or less. The area of the CO₂ separation film is preferably 0.05 m² or more. The area of the CO₂ separation film is preferably 0.03 m² or more and 1000 m² or less, more preferably 0.05 m² or more and 800 m² or less, and even more preferably 0.1 m² or more and 500 m² or less. In addition, the thickness of the CO₂ separation film is preferably 50 nm or more and 5000 nm or less, and more preferably 80 nm or more and 1000 nm or less. Such laminated films have been difficult to produce conventionally; however, it is possible to produce by the aforementioned method for producing a laminated film. The shape of the laminated film is not particular limited. The laminated film is preferably a film roll wound up into a roll form in the viewpoint of handling being easy.

### <<CO₂ Separation Method>>

A CO₂ separation method includes a separation step of separating CO₂ from a gas by supplying a gas containing CO₂ to the aforementioned laminated film. The aforementioned laminated film includes a thin and large CO₂ separation film for which defects are suppressed, and thus it is possible to perform CO₂ separation processing in a large amount with high efficiency. By separating and recovering CO₂ by such a CO₂ separation method, it is possible to suppress global warming from CO₂. In addition, the recovered CO₂ can be used as a carbon resource.

### EXAMPLES

Although the present invention will be described in further detail by way of the Examples below, the present invention is not to be limited to these Examples.

### (Examples)

### <Preparation of Raw Material Composition (Coating Film-Forming Composition)>

The raw material composition (coating film-forming composition) was prepared by dissolving 100 parts by mass of PDMS elastomer (mass average molecular weight Mn 2500), and 10 parts by mass of a curing agent for the PDMS elastomer in decahydronaphthalene so as to make a PDMS elastomer concentration of 5% by mass. The viscosity of the obtained raw material composition at 24°C was 20 cp.

### <Production of Laminated Film>

First, onto the support (PET film) 1, a 10% by mass ethanol solution of polyvinyl alcohol as the sacrificial layer-forming composition was coated by a gravure coating method on the support 1 to form a sacrificial layer 2 of 15 µm film thickness.

Next, a raw material composition (coating film-forming composition) was coated in a layer form by a gravure coating method onto the sacrificial layer 2, and heated at 50°C for 0.5 minutes to form a PDMS film 3a of gel form.

Next, by overlapping the support substrate (porous polyimide film, pore size of 50 nm or more and 2500 nm or less) 4 onto the PDMS film 3a of gel form and bringing the support substrate 4 and PDMS film 3a into contact by a roller, the support substrate 4 and PDMS film 3a were adhered by intermolecular force.

Next, the product of adhering the support substrate 4 and PDMS film 3a was heated at 110°C for 3 minutes to crosslink (cure) the PDMS and form a cured film (CO₂ separation film).

Next, by unrolling the support (PET film) 1 at a conveying speed: 0.6 m/min, the support 1 was peeled from the sacrificial layer 2.

After peeling the support 1, the exposed sacrificial layer 2 was washed with running water for 5 minutes at room temperature (25°C) to obtain a multilayer body 10 in which the cured film (CO₂ separation film) 3 and support substrate (porous polyimide film) 4 are laminated. The film thickness of the cured film (CO₂ separation film) 3 was 1000 nm.

By the above-mentioned operations, various size cured films (CO₂ separation film) were produced, and the surface of the cured films were visually observed (observation area: 5 cm square). As a result, no defects (chips, pinholes) were observed from 0.0025 m² (5 cm square) to a size of 0.05 m² or 0.06 m² (A4 size), or as large size as 130 m². It should be noted that, upon producing a small sized product, a bar coating method was used in place of the gravure coating method as the coating method. Therefore, according to the aforementioned method for producing a laminated film, it is understood that a laminated film can be produced in which a thin and large CO₂ separation film for which defects are suppressed, and a support substrate (porous film) are laminated.

### [Comparative Example 1]

A silicon wafer washed using a piranha solution was prepared as the substrate. On the substrate (silicon wafer), 100 µL of a 15% by mass ethanol solution of polyvinyl alcohol as a sacrificial layer-forming composition was dropped and coated by a spin coating method (500 rpm, 20 seconds) to form a sacrificial layer of 15 µm film thickness.

Next, on the sacrificial layer, the raw material composition (coating film-forming composition) prepared in Example 1 was coated in layer form by a spin coating method (1000 rpm, 20 seconds), and heated by a hot plate at 120°C for 5 minutes to crosslink (cure) the PDMS, thereby forming a cured film (CO₂ separation film).

After crosslinking, it was placed in air to cool to room temperature, followed by immersing in ethanol. At this time, cuts were made at the edge of the cured film (CO₂ separation film) and sacrificial layer with a design knife. When left for a while, the sacrificial layer was dissolved in ethanol, and the cured film (CO₂ separation film) was peeled from the support. Thereafter, the solvent was removed and dried to isolate the cured film (CO₂ separation film). It should be noted that, as described above, the method of Comparative Example 1 includes steps unfit for continuous production (mass production) such as spin coating, room temperature placement and making cuts with a cutting knife.

By the above-mentioned operations, various size cured films (CO₂ separation film) were produced, and the surfaces of the cured films were visually observed (observation area: 5 cm square). As a result thereof, samples with a size of 0.0025 m² (5 cm square) and more were observed to have chips and pinholes.

### EXPLANATION OF REFERENCE NUMERALS

1 support
2 sacrificial layer
3a coating film
3 cured film (CO₂ separation film)
4 support substrate
10 laminated film
11 roll

## Claims

1. A method for producing a laminated film in which a CO₂ separation film, and a porous film that is a support substrate of the CO₂ separation film are laminated, the method comprising:
a coating film forming step of forming a coating film of a raw material composition comprising a raw material of the CO₂ separation film on a sacrificial layer;
a porous film bonding step of bonding the porous film on the coating film; and
a sacrificial layer removing step of removing the sacrificial layer after the porous film bonding step,
wherein the raw material composition comprises a silicon-containing resin and an organic solvent,
the silicon-containing resin is a water insoluble resin, and
a mass average molecular weight of the silicon-containing resin is 2000 or more.

2. The method for producing a laminated film according to claim 1, wherein the CO₂ separation film has an area of 0.03 m² or more, and a thickness of 1 nm or more and 10000 nm or less.

3. The method for producing a laminated film according to claim 1, wherein the silicon-containing resin comprises polydimethylsiloxane.

4. The method for producing a laminated film according to claim 3, further comprising a curing step of curing the polydimethylsiloxane after the porous film bonding step and before the sacrificial layer removing step.

5. The method for producing a laminated film according to claim 1, wherein the porous film is a porous film consisting of a polyimide.

6. The method for producing a laminated film according to claim 1, wherein the porous film has a pore size of 1 mm or less.

7. The method for producing a laminated film according to any one of claims 1 to 6, further comprising:
a sacrificial layer forming step of forming the sacrificial layer on a support of the sacrificial film prior to the coating film forming step; and
a support peeling step of peeling the support from the sacrificial layer after the porous film bonding step and before the sacrificial layer removing step.

8. The method for producing a laminated film according to claim 7, wherein the support is a film consisting of polyethylene terephthalate.

9. The method for producing a laminated film according to claim 1, wherein the laminated film is a wound up film roll.

10. A laminated film comprising a CO₂ separation film and a porous film which is a support substrate of the CO₂ separation film that are laminated,
wherein the CO₂ separation film has an area of 0.03 m² or more, and a thickness of 1 nm or more and 10000 nm or less.

11. The laminated film according to claim 10, wherein the film is a film roll wound up into a roll form.

12. A CO₂ separation method comprising a separation step of separating CO₂ from a gas containing CO₂ by supplying the gas to the laminated film according to claim 10 or 11.
